# EUROPÄISCHE PATENTANMELDUNG

(11) **EP 3 702 633 A1**
(43) Veröffentlichungstag der Anmeldung: **02.09.2020**
(21) Anmeldenummer: 19159966.1
(22) Anmeldetag: 28.02.2019
(51) Int. Cl.: F16C 39/02, F16C 17/24, F16C 19/52, F16C 32/04

(54) **ÜBERWACHEN EINES FANGLAGERS**

(71) Anmelder: Siemens Aktiengesellschaft, 80333 München (DE)
(72) Erfinder: Köhler, Bert-Uwe, 14612 Falkensee (DE); Neumann, Sönke, 10585 Berlin (DE)

(57) **Zusammenfassung**

Die Erfindung betrifft ein Verfahren zum Überwachen eines Fanglagers (1) für ein Magnetlager, wobei während des Betriebs des Magnetlagers fortlaufend eine Temperatur des Fanglagers (1) erfasst wird und anhand des Temperaturverlaufs der erfassten Temperatur auf einen Zustand des Fanglagers (1) geschlossen wird.

## Beschreibung

Die Erfindung betrifft ein Fanglager für ein Magnetlager und ein Verfahren zum Überwachen eines Fanglagers.

Ein Magnetlager wird zur kontaktfreien Lagerung eines Objekts, beispielsweise einer Rotorwelle, durch ein Magnetfeld verwendet. Um das Magnetfeld zu erzeugen, weist ein Magnetlager insbesondere Elektromagneten auf. Um das zu Objekt zu lagern, wenn die Elektromagneten nicht bestromt werden oder das Magnetlager aus anderen Gründen das Objekt nicht lagern kann, wird ein Fanglager eingesetzt. Im Unterschied zu dem Magnetlager unterliegt das Fanglager einem Verschleiß durch die Lagerung des Objekts. Da der Austausch eines Fanglagers aufwändig und kostspielig ist, ist die Kenntnis eines Zustands des Fanglagers vorteilhaft, um das Fanglager im Falle eines die Funktionstüchtigkeit beeinträchtigenden Verschleißes rechtzeitig austauschen zu können, aber einen unnötigen Austausch zu vermeiden.

Der Erfindung liegt die Aufgabe zugrunde, ein Verfahren und ein Fanglager anzugeben, die eine verbesserte Ermittlung eines Zustands des Fanglagers ermöglichen.

Die Aufgabe wird erfindungsgemäß durch ein Verfahren mit den Merkmalen des Anspruchs 1 und ein Fanglager mit den Merkmalen des Anspruchs 6 gelöst.

Vorteilhafte Ausgestaltungen der Erfindung sind Gegenstand der Unteransprüche.

Bei dem erfindungsgemäßen Verfahren zum Überwachen eines Fanglagers für ein Magnetlager wird während des Betriebs des Magnetlagers fortlaufend eine Temperatur des Fanglagers erfasst und anhand des Temperaturverlaufs der erfassten Temperatur wird auf einen Zustand des Fanglagers geschlossen.

Die Erfindung nutzt aus, dass ein Fanglager bei Belastung durch Reibung erwärmt wird und dass die Erwärmung zum einen Verschleiß verursachende Benutzung des Fanglagers anzeigt und zum anderen die Fanglagererwärmung selbst zu erhöhtem Verschleiß bei Benutzung des Fanglagers führt. Daher kann durch das fortlaufende Erfassen und Auswerten einer Temperatur des Fanglagers im Betrieb des Magnetlagers ermittelt werden, ob das Fanglager während des Betriebs des Magnetlagers belastet wird und welchen Grad an Verschleiß das Fanglager aufweist. Insbesondere kann der Temperaturverlauf der Temperatur des Fanglagers verwendet werden, um eine Restlebensdauer des Fanglagers zu ermitteln.

Beispielsweise wird ein erster Temperaturschwellenwert vorgegeben und auf eine Abnutzung des Fanglagers geschlossen, wenn die Temperatur des Fanglagers den ersten Temperaturschwellenwert überschreitet. Der erste Temperaturschwellenwert wird dabei derart vorgegeben, dass er einen die Funktionstüchtigkeit beeinträchtigenden Verschleiß des Fanglagers signalisiert. Beispielsweise wird der erste Temperaturschwellenwert an einem baugleichen Fanglager experimentell ermittelt. Dadurch kann zuverlässig ein die Funktionstüchtigkeit beeinträchtigender Verschleiß des Fanglagers erkannt werden, um das Fanglager erforderlichenfalls auszutauschen.

Ferner wird beispielsweise ein zweiter Temperaturschwellenwert vorgegeben und auf eine Belastung des Fanglagers geschlossen, wenn die Temperatur des Fanglagers den zweiten Temperaturschwellenwert überschreitet. Der zweite Temperaturschwellenwert wird dabei derart vorgegeben, dass er eine Belastung des Fanglagers signalisiert. Beispielsweise wird auch der zweite Temperaturschwellenwert an einem baugleichen Fanglager experimentell ermittelt. Dadurch kann insbesondere ein unerwünschtes Mitdrehen des Fanglagers mit einem von dem Magnetlager gelagerten Objekt, beispielsweise einer Rotorwelle, erkannt werden.

Des Weiteren wird beispielsweise anhand des Temperaturverlaufs eine Restlebensdauer des Fanglagers ermittelt. Beispielsweise wird dabei ausgewertet, wie oft und wie lange die Temperatur des Fanglagers den ersten Temperaturschwellenwert und/oder den zweiten Temperaturschwellenwert überschreitet. Dadurch kann kontinuierlich die Funktionsfähigkeit des Fanglagers überwacht und erforderlichenfalls rechtzeitig ein Austausch des Fanglagers vorbereitet werden.

Vorzugsweise wird die Temperatur des Fanglagers mit einem in das Fanglager integrierten Temperatursensor erfasst. Ein in das Fanglager integrierter Temperatursensor ermöglicht eine wesentlich genauere und zuverlässigere Erfassung der Temperatur als beispielsweise berührungslose Verfahren zum Erfassen einer Temperatur des Fanglagers wie Infrarot-Temperaturmessungen.

Ein erfindungsgemäßes Fanglager für ein Magnetlager weist einen Temperatursensor auf, der dazu eingerichtet ist, fortlaufend eine Temperatur des Fanglagers zu erfassen. Ein erfindungsgemäßes Fanglager ermöglicht dank des Temperatursensors die Durchführung des erfindungsgemäßen Verfahrens mit den bereits oben genannten Vorteilen.

Beispielsweise umfasst das Fanglager einen um eine Drehachse verlaufenden Außenring und einen konzentrisch zu dem Außenring um die Drehachse verlaufenden Innenring, der um die Drehachse drehbar gelagert ist, und der Temperatursensor ist dazu eingerichtet, fortlaufend eine Temperatur des Außenrings zu erfassen. Beispielsweise weist das Fanglager ein Gehäuse auf, in dem der Außenring angeordnet ist, und der Temperatursensor ist an dem Gehäuse, beispielsweise durch eine Schraubverbindung, befestigt und steht, beispielsweise direkt oder über ein Wärmeleitelement, in thermischem Kontakt mit dem Außenring. Ferner kann ein Federelement vorgesehen sein, das den Temperatursensor in Richtung des Außenrings drückt.

Die vorgenannten Ausgestaltungen der Erfindung betreffen Fanglager einer häufig verwendeten Bauform mit einem Außenring und einem darin drehbar gelagerten Innenring. Bei derartigen Fanglagern ist es vorteilhaft, mit dem Temperatursensor eine Temperatur des Außenrings zu erfassen, da der Innenring beweglich ist und daher insbesondere eine Verkabelung des Temperatursensors aufwändig wäre, wenn dieser an dem Innenring angeordnet wäre. Die Befestigung des Temperatursensors an einem Gehäuse des Fanglagers, insbesondere mit einer Schraubverbindung, erleichtert vorteilhaft die Montage und den Austausch des Temperatursensors, beispielsweise gegenüber einer Befestigung direkt an dem Außenring. Durch ein Wärmeleitelement, beispielsweise eine Wärmeleitpaste, kann der thermische Kontakt zwischen dem Temperatursensor und dem Außenring vorteilhaft verbessert werden. Auch durch ein Federelement, das den Temperatursensor in Richtung des Außenrings drückt, kann der thermische Kontakt zwischen dem Temperatursensor und dem Außenring vorteilhaft verbessert werden.

Das Fanglager ist beispielsweise als ein Wälzlager oder als ein Gleitlager ausgebildet. Dies sind besonders zweckmäßige und gebräuchliche Arten von Fanglagern.

Der Temperatursensor weist beispielsweise einen Platin-Messwiderstand auf. Platin-Messwiderstände sind besonders zum Erfassen der Temperatur des Fanglagers geeignet, da sie sehr robust und unempfindlich gegenüber elektromagnetischen Störungen sind und gleichzeitg eine gute Messgenauigkeit und Austauschbarkeit aufweisen.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
FIG 1 eine Schnittdarstellung eines ersten Ausführungsbeispiels eines Fanglagers,
FIG 2 eine Schnittdarstellung eines zweiten Ausführungsbeispiels eines Fanglagers.

Einander entsprechende Teile sind in den Figuren mit denselben Bezugszeichen versehen.

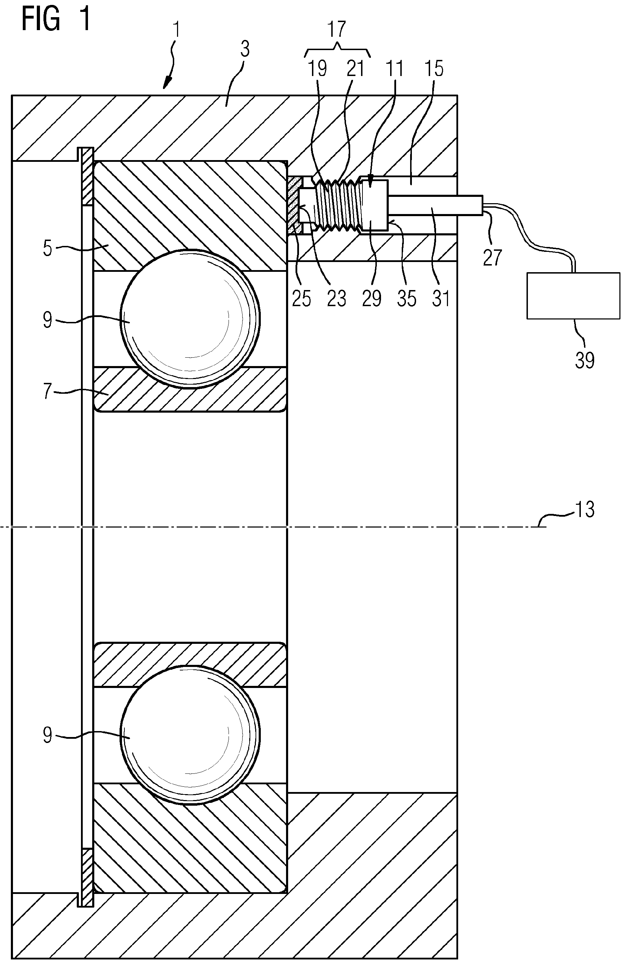

Figur 1 zeigt ein erstes Ausführungsbeispiel eines erfindungsgemäßen Fanglagers 1 für ein (nicht dargestelltes) Magnetlager in einer Schnittdarstellung. Das Fanglager 1 ist als ein Wälzlager ausgebildet und weist ein Gehäuse 3, einen Außenring 5, einen Innenring 7, Wälzkörper 9 und einen Temperatursensor 11 auf.

Der Außenring 5 und der Innenring 7 sind konzentrisch um eine Drehachse 13 angeordnet. Der Außenring 5 verläuft um den Innenring 7 herum. Zwischen dem Außenring 5 und dem Innenring 7 sind kugelförmige Wälzkörper 9 angeordnet, durch die der Innenring 7 um die Drehachse 13 drehbar gelagert ist. Der Außenring 5 ist fest in dem Gehäuse 3 angeordnet.

Der Temperatursensor 11 ist in einer Gehäuseausnehmung 15 des Gehäuses 3 angeordnet, die sich zwischen einer Außenseite des Gehäuses 3 und einer Oberfläche des Außenrings 5 erstreckt. Der Temperatursensor 11 ist durch eine Schraubverbindung 17 an dem Gehäuse 3 befestigt. Die Schraubverbindung 17 wird von einem Außengewinde 19 des Temperatursensors 11 und einem dazu korrespondierenden Innengewinde 21 des Gehäuses 3 gebildet. Das Innengewinde 21 ist in einer Wandung der Gehäuseausnehmung 15 ausgebildet.

Der Temperatursensor 11 weist ein dem Außenring 5 zugewandtes erstes Sensorende 23 auf, das über ein zwischen dem ersten Sensorende 23 und dem Außenring 5 in der Gehäuseausnehmung 15 angeordnetes Wärmeleitelement 25 mit dem Außenring 5 in thermischem Kontakt steht. Das Wärmeleitelement 25 ist beispielsweise als eine Wärmeleitpaste ausgeführt. Ein dem ersten Sensorende 23 gegenüberliegendes zweites Sensorende 27 des Temperatursensors 11 ragt aus der Gehäuseausnehmung 15 heraus.

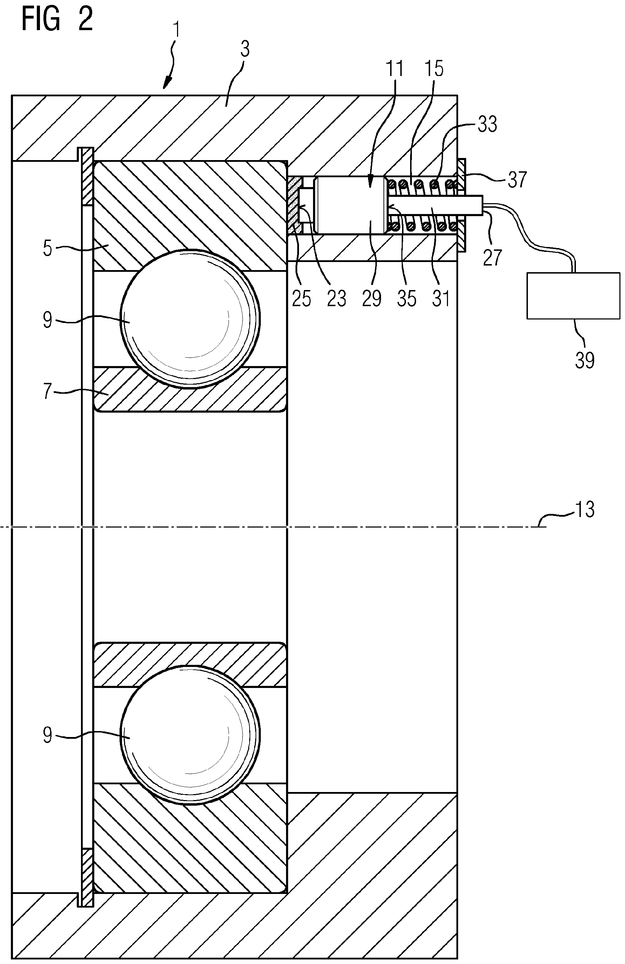

Figur 2 zeigt ein zweites Ausführungsbeispiel eines erfindungsgemäßen Fanglagers 1 für ein (nicht dargestelltes) Magnetlager in einer Schnittdarstellung. Dieses Ausführungsbeispiel unterscheidet sich von dem in Figur 1 dargestellten Ausführungsbeispiel lediglich durch die Art, wie der Temperatursensor 11 in der Gehäuseausnehmung 15 fixiert ist. In dem in Figur 2 gezeigten Ausführungsbeispiel wird der Temperatursensor 11 nicht durch eine Schraubverbindung 17 an dem Gehäuse 3 befestigt, sondern durch ein vorgespanntes Federelement 33 in Richtung des Außenrings 5 an das Wärmeleitelement 25 gedrückt. Ein zu dem ersten Sensorende 23 verlaufender erster Sensorabschnitt 29 des Temperatursensors 11 weist einen größeren Durchmesser als ein zu dem zweiten Sensorende 27 verlaufender zweiter Sensorabschnitt 31 auf. Das Federelement 33 ist als eine Schraubenfeder ausgebildet, die um den zweiten Sensorabschnitt 31 herum in der Gehäuseausnehmung 15 angeordnet ist. Das Federelement 33 erstreckt sich zwischen einer Anschlagfläche 35 des Temperatursensors 11, die die beiden Sensorabschnitte 29, 31 voneinander trennt, und einem Verschlusselement 37, das die Gehäuseausnehmung 15 bis auf eine Öffnung verschließt, durch die der zweite Sensorabschnitt 31 verläuft.

In beiden in den Figuren dargestellten Ausführungsbeispielen weist der Temperatursensor 11 beispielsweise einen Platin-Messwiderstand, z. B. einen Pt100-Messwiderstand, auf. Der Temperatursensor 11 ist dazu eingerichtet, während des Betriebs des Magnetlagers fortlaufend eine Temperatur des Außenrings 5 zu erfassen. Die von dem Temperatursensor 11 erfassten Messsignale werden einer Auswerteeinheit 39 zugeführt. Von der Auswerteeinheit 39 wird aus den Messsignalen ein Temperaturverlauf der Temperatur des Fanglagers 1 ermittelt. Anhand des Temperaturverlaufs wird auf einen Zustand des Fanglagers 1 geschlossen, wobei dies von einem Benutzer und/oder automatisiert, beispielsweise von der Auswerteeinheit 39, durchgeführt werden kann.

Beispielsweise wird ein erster Temperaturschwellenwert vorgegeben und auf eine Abnutzung des Fanglagers 1 geschlossen, wenn die Temperatur des Fanglagers 1 den ersten Temperaturschwellenwert überschreitet. Dadurch kann zuverlässig ein die Funktionstüchtigkeit beeinträchtigender Verschleiß des Fanglagers 1 erkannt werden, um das Fanglager 1 erforderlichenfalls auszutauschen.

Ferner wird beispielsweise ein zweiter Temperaturschwellenwert vorgegeben und auf eine Belastung des Fanglagers 1 geschlossen, wenn die Temperatur des Fanglagers den zweiten Temperaturschwellenwert überschreitet. Dadurch kann insbesondere ein unerwünschtes Mitdrehen des Fanglagers 1 mit einem von dem Magnetlager gelagerten Objekt, beispielsweise einer Rotorwelle, erkannt werden.

Des Weiteren wird beispielsweise anhand des Temperaturverlaufs eine Restlebensdauer des Fanglagers 1 ermittelt. Beispielsweise wird dabei ausgewertet, wie oft und wie lange die Temperatur des Fanglagers 1 den ersten Temperaturschwellenwert und/oder den zweiten Temperaturschwellenwert überschreitet. Dadurch kann kontinuierlich die Funktionsfähigkeit des Fanglagers 1 überwacht und erforderlichenfalls rechtzeitig ein Austausch des Fanglagers 1 vorbereitet werden.

Die in den Figuren darstellten Ausführungsbeispiele eines erfindungsgemäßen Fanglagers 1 können auf verschiedene Weisen zu weiteren Ausführungsbeispielen abgewandelt werden. Beispielsweise kann das Fanglager 1 als ein Gleitlager statt als ein Wälzlager ausgebildet sein. Ferner kann der Temperatursensor 11 anders als durch eine Schraubverbindung 17 oder ein Federelement 33 an dem Gehäuse 3 angeordnet sein, beispielsweise durch eine Klemm- oder Klebverbindung. Außerdem kann das Wärmeleitelement 25 entfallen, wenn der Temperatursensor 11 auch ohne das Wärmeleitelement 25 einen ausreichenden thermischen Kontakt mit dem Außenring 5 aufweist. Des Weiteren kann der Temperatursensor 11 direkt an dem Außenring 5 statt an dem Gehäuse 3 angeordnet sein. Alternativ kann der Temperatursensor 11 auch an dem Innenring 7 angeordnet und dazu ausgebildet sein, fortlaufend eine Temperatur des Innenrings 7 zu erfassen. Insbesondere wenn der Temperatursensor 11 an dem Innenring 7 angeordnet ist, kann ferner vorgesehen sein, dass der Temperatursensor 11 zur drahtlosen Übermittlung der Messsignale an die Auswerteeinheit 39 ausgebildet ist.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zum Überwachen eines Fanglagers (1) für ein Magnetlager, wobei
- während des Betriebs des Magnetlagers fortlaufend eine Temperatur des Fanglagers (1) erfasst wird und
- anhand des Temperaturverlaufs der erfassten Temperatur auf einen Zustand des Fanglagers (1) geschlossen wird.

2. Verfahren nach Anspruch 1, wobei ein erster Temperaturschwellenwert vorgegeben wird und auf eine Abnutzung des Fanglagers (1) geschlossen wird, wenn die Temperatur des Fanglagers (1) den ersten Temperaturschwellenwert überschreitet.

3. Verfahren nach Anspruch 1 oder 2, wobei ein zweiter Temperaturschwellenwert vorgegeben wird und auf eine Belastung des Fanglagers (1) geschlossen wird, wenn die Temperatur des Fanglagers (1) den zweiten Temperaturschwellenwert überschreitet.

4. Verfahren nach einem der vorhergehenden Ansprüche, wobei anhand des Temperaturverlaufs eine Restlebensdauer des Fanglagers (1) ermittelt wird.

5. Verfahren nach einem der vorhergehenden Ansprüche, wobei die Temperatur des Fanglagers (1) mit einem in das Fanglager (1) integrierten Temperatursensor (11) erfasst wird.

6. Fanglager (1) für ein Magnetlager, wobei das Fanglager (1) einen Temperatursensor (11) aufweist, der dazu eingerichtet ist, fortlaufend eine Temperatur des Fanglagers (1) zu erfassen.

7. Fanglager (1) nach Anspruch 6 mit einem um eine Drehachse (13) verlaufenden Außenring (5) und einem konzentrisch zu dem Außenring (5) um die Drehachse (13) verlaufenden Innenring (7), der um die Drehachse (13) drehbar gelagert ist, wobei der Temperatursensor (11) dazu eingerichtet ist, fortlaufend eine Temperatur des Außenrings (5) zu erfassen.

8. Fanglager (1) nach Anspruch 7 mit einem Gehäuse (3), in dem der Außenring (5) angeordnet ist, wobei der Temperatursensor (11) an dem Gehäuse (3) angeordnet ist und in thermischem Kontakt mit dem Außenring (5) steht.

9. Fanglager (1) nach Anspruch 8, wobei der Temperatursensor (11) durch eine Schraubverbindung (17) an dem Gehäuse (3) befestigt ist.

10. Fanglager (1) nach einem der Ansprüche 7 bis 9 mit einem Federelement (33), das den Temperatursensor (11) in Richtung des Außenrings (5) drückt.

11. Fanglager (1) nach einem der Ansprüche 7 bis 10, wobei der Temperatursensor (11) über ein Wärmeleitelement (25) mit dem Außenring (5) in thermischem Kontakt steht.

12. Fanglager (1) nach einem der Ansprüche 6 bis 11, das als ein Wälzlager oder als ein Gleitlager ausgebildet ist.

13. Fanglager (1) nach einem der Ansprüche 6 bis 12, wobei der Temperatursensor (11) einen Platin-Messwiderstand aufweist.
